Europäisches Patentamt

European Patent Office

Office européen des brevets

(11) Veröffentlichungsnummer: **0 357 060**
**A2**

(12) **EUROPÄISCHE PATENTANMELDUNG**

(21) Anmeldenummer: 89116049.1

(51) Int. Cl.⁵: **H02H 9/04**

(22) Anmeldetag: 31.08.89

(30) Priorität: 01.09.88 DE 3829705

(43) Veröffentlichungstag der Anmeldung:
07.03.90 Patentblatt 90/10

(84) Benannte Vertragsstaaten:
**BE CH DE FR GB IT LI LU**

(71) Anmelder: **ABB CEAG Licht- und Stromversorgungstechnik GmbH Senator-Schwarz-Ring 26 D-4770 Soest(DE)**

(72) Erfinder: **Maier, Franz-Josef Am Kreuzpfad 24 D-4770 Soest-Deiringen(DE)**

(74) Vertreter: **Rupprecht, Klaus, Dipl.-Ing. et al c/o Asea Brown Boveri Aktiengesellschaft Zentralbereich Patente Postfach 100351 D-6800 Mannheim 1(DE)**

(54) **Überspannungsschutzeinrichtung für eine Elektronikschaltung.**

(57) Bei primär getakteten Netzgeräten oder anderen vergleichbaren Leistungselektronikschaltungen ohne Netztransformator können gelegentlich auftretende Netzspannungsspitzen den Glättungskondensator (7) oder die nachgeschaltete Elektronikschaltung (8) gefährden. Durch die angegebene Überspannungsschutzeinrichtung für eine Elektronikschaltung werden Netzspannungsspitzen auf ungefährliche Werte der Betriebsgleichspannung begrenzt. Hierzu wird der in den Glättungskondensator (7) fließende Primärladestrom (I) mittels einer Stromerfassungseinrichtung (6) ermittelt. Ein Grenzwertkomparator (10) vergleicht die erfaßte Größe (US) mit einer vorgebbaren Referenzspannung (Uref) und gibt ein Ausschaltsignal (A) zum Öffnen eines zwischen Gleichrichter (3) und Glättungskondensator (7) angeordneten Halbleiterschalters (5), wenn der vorgegebene Grenzwert überschritten wird. Auf diese Weise werden Netzspannungsspitzen mit Hilfe eines parallel zum Halbleiterschalter (5) liegenden Einschaltstrombegrenzungswiderstandes (4) auf ungefährliche Werte reduziert.

## Überspannungsschutzeinrichtung für eine Elektronikschaltung

Die Erfindung bezieht sich auf eine Überspannungsschutzeinrichtung für eine Elektronikschaltung gemäß dem Oberbegriff des einzigen Anspruchs.

Eine solche Überspannungsschutzeinrichtung ist aus O. Kilgenstein, Schaltnetzteile in der Praxis, Vogel-Buchverlag, Würzburg, 1986, Seite 271 in Verbindung mit Seite 115 bis 121 bekannt. Anwendungsgebiete sind insbesondere Netzgeräte und andere vergleichbare Leistungselektronikschaltungen.

Konventionelle Netzgeräte zur Stromversorgung von elektronischen Schaltungen enthalten einen Netztransformator zur Potentialtrennung und Spannungsanpassung. Eine Sekundärwicklung dieses Netztransformators speist über einen Gleichrichter mit nachgeschaltetem hochkapazitivem Elektrolytkondensator die elektronische Schaltung. Die große Kapazität des Kondensators verhindert in Verbin dung mit dem ohmschen Innenwiderstand des Transformators und mit dessen Streuinduktivität, daß Spannungsspitzen der Netzspannung zu einem nennenswerten Anstieg der Gleichspannung führen.

Primärgetaktete Netzgeräte enthalten keinen Netztransformator mehr. Die Netzwechselspannung wird gleichgerichtet und mit einem Elektrolytkondensator mäßiger Kapazität geglättet. Ein oder mehrere Transistoren zerhakken die resultierende Gleichspannung, so daß zur Potentialtrennung und Spannungsanpassung dank der hohen verwendeten Taktfrequenz ein Übertrager dienen kann, der wesentlich kleiner ist als ein Netztransformator gleicher Leistung.

Da bei primärgetakteten Netzgeräten zwischen dem Netz und dem Elektrolytkondensator der relativ hohe ohmschinduktive Innenwiderstand eines Transformators fehlt, führen Spannungs spitzen der Netzwechselspannung relativ schnell zu einer gefährlichen Überladung des Glättungskondensators. Eine daraus resultierende zu hohe Kondensatorspannung gefährdet sowohl den Kondensator selbst als auch den oder die nachfolgenden Transistoren der Elektronikschaltung.

Nach VDE 0160 können gelegentlich Netzspannungsspitzen vom 2,3-fachen Wert des Nennscheitelwertes der Netzwechselspannung auftreten. Will man deren Einfluß auf die Gleichspannung begrenzen, so ist mindestens ein Strombegrenzungswiderstand in die Netzeinspeisung des Netzgerätes einzufügen. Nur bei Netzgeräten relativ kleiner Leistung ist es sinnvoll, allein durch ausreichend große ohmsche und kapazitive Werte die Überhöhung der Kondensatorspannung genügend zu begrenzen. Darüberhinaus sind Begrenzungselemente notwendig.

Die Problematik besteht darin, Begrenzungselemente mit genügender Stoßstromfestigkeit bei gleichzeitig ausreichend niedrigem differentiellem Widerstand zu finden. Die folgenden bekannten Begrenzungselemente erweisen sich als ungeeignet: Metalloxid-Varistoren (spannungsabhängige Widerstände) und Zenerdioden (in Sperrichtung betriebene Dioden mit ausgeprägtem Lawineneffekt)

Der Erfindung liegt davon ausgehend die Aufgabe zugrunde, eine Überspannungsschutzeinrichtung für eine Elektronikschaltung der eingangs genannten Art anzugeben, mit deren Hilfe auftretende Spannungsspitzen der Netzwechselspannung auf ungefährliche Werte der Betriebsgleichspannung begrenzt werden.

Diese Aufgabe wird in Verbindung mit den Merkmalen des Oberbegriffes erfindungsgemäß durch die im Kennzeichen des Anspruchs angegebenen Merkmale gelöst.

Die mit der Erfindung erzielbaren Vorteile bestehen insbesondere darin, daß ab einem bestimmten Grenzwert der Netzspannungsspitze der Halbleiterschalter über seine Steuerschaltung geöffnet wird, wodurch der Einschaltstrom-Begrenzungswiderstand in Reihe zur Elektronikschaltung geschaltet wird und sich hierdurch eine Reduzierung der Netzüberspannung auf einen ungefährlichen Wert ergibt. Die meisten Komponenten der Schaltung, wie Einschaltstrom-Begrenzungswiderstand und Halbleiterschalter mit Steuerschaltung, sind bereits für die Begrenzung des Einschaltstromes notwendig, so daß der bauteilseitige Mehraufwand für den zusätzlichen Überspannungsschutz gering ist. Es kann somit eine preisgünstige, platzsparende Schaltung zur Erfüllung der VDE 0160 erstellt werden. Es ergibt sich auch aufgrund des Ansprechens der Überspannungsschutzeinrichtung auf Netzspannungsspitzen keine Betriebsstörung, z.B. keine Abschaltung des Gerätes.

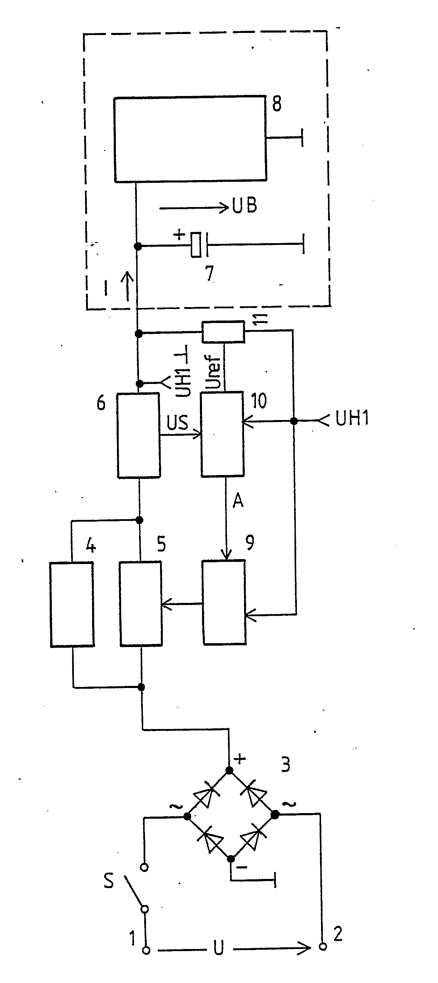

Die Erfindung wird nachstehend anhand des in der Zeichnung dargestellten Ausführungsbeispieles erläutert.

In der einzigen Figur ist eine Überspannungsschutzeinrichtung dargestellt. Zwischen Netzanschlußklemmen 1, 2 liegt die Netzwechselspannung U an. Die erste Wechselspannungsklemme eines Gleichrichters 3 ist über einen Schalter S mit der Netzanschlußklemme 1 verbunden, während die zweite Wechselspannungsklemme des Gleichrichters direkt an der Netzanschlußklemme 2 liegt. Die erste Gleichspannungsklemme des Gleichrichters 3 ist an Masse angeschlossen, während die zweite Gleichspannungsklemme des Gleichrichters mit einem Einschaltstrom-Begrenzungswiderstand 4 und einem parallel hierzu angeordneten Halbleiterschalter 5 verbunden ist. Die weiteren, miteinander verbundenen Anschlüsse des Widerstandes 4 und des Halbleiterschalters 5 führen über eine Stromerfassungseinrichtung 6 zu den positiven Anschlußklemmen eines Glättungskondensators (Ladekondensator) 7 und einer Elektronikschaltung 8, z.B. eines Sperrwandlers, Durchflußwandlers oder Gegentaktwandlers. Die negativen Klemmen des Glättungskondensators 7 und der Elektronikschaltung 8 liegen jeweils an Masse. Zur Ansteuerung des Halbleiterschalters 5 ist eine Steuerschaltung 9 vorgesehen, die mit einer (z.B. aus der positiven Gleichspannung abgeleiteten) Hilfsspannung UH1 sowie mit Ausschaltsignalen A eines Grenzwertkomparators 10 beaufschlagbar ist. Dabei liegt dem Grenzwertkomparator 10 die Signalspannung US von der Stromerfassungseinrichtung 6 sowie eine Referenzspannung Uref an. Die Referenzspannung Uref wird mit Hilfe eines Referenzspannungsbildners 11 aus der Hilfsspannung UH1 gebildet (z.B. unter Einsatz einer Zenerdiode). Dabei sind die Stromerfassungseinrichtung 6 und die Referenzspannung Uref so auszuwählen bzw. einzustellen, daß die von der Stromerfassungs einrichtung 6 abgegebene Signalspannung US bei Normalbetrieb stete unterhalb des Wertes der Referenzspannung Uref bleibt, jedoch den Wert der Referenzspannung Uref beim Auftreten einer Netzüberspannung bzw. Netzspannungsspitze überschreitet.

In der vorstehend beschriebenen Schaltung wird die Zeitkonstante des Einschaltstrom-Begrenzungswiderstandes 4 und des Glättungskondensators 7 zur Begrenzung der am Glättungskondensator 7 bzw. an der Elektronikschaltung 8 anstehenden Verbrauchereingangsspannung UB herangezogen. Die Schaltung erfüllt demnach zwei Aufgaben: Sie begrenzt einerseits den Einschaltstrom und sie dient andererseits zum Schutz vor Netzüberspannungen bzw. Netzspannungsspitzen.

Nach dem Schließen des Schalters 5 ergibt sich über den Gleichrichter 3 und den geschlossenen Halbleiterschalter 5 ein relativ hoher Primärladestrom I zur Aufladung des Glättungskondensators 7. Die Stromerfassungseinrichtung 6 ermittelt den entsprechenden Stromwert und wandelt ihn in die korrespondierende Signalspannung US zur Übermittlung an den Grenzwertkomparator 10 um. Der Grenzwertkomparator 10 vergleicht die Signalspannung US mit der Referenzspannung Uref. Der Grenzwertkomparator 10 gibt ein Ausschaltsignal A an die Steuerschaltung 9 ab, wenn die Signalspannung US die Referenzspannung Uref überschreitet. Daraufhin wird der Halbleiterschalter 5 durch die Steuerschaltung 9 gesperrt (geöffnet). Infolgedessen fließt der Primärladestrom I über den parallel zum Halbleiterschalter 5 angeordneten Einschaltstrom-Begrenzungswiderstand 4 zum Glättungskondensator 7 bzw. zur Elektronikschaltung 8. Durch diese ohmsche Begrenzung sinkt der Primärladestrom I auf einen Wert unterhalb des durch den Grenzwertkomparator 10 festgelegten Schwellwertes.

Während des Normalbetriebes der Elektronikschaltung 8 ist der Halbleiterschalter 5 geschlossen, d.h. es ergibt sich ein Primärladestrom I vom Gleichrichter 3 über den Halbleiterschalter 5 zur Elektronikschaltung 8. Beim Auftreten einer Netzüberspannung bzw. Netzspannungsspitze zwischen den Netzanschlußklemmen 1, 2 steigt der Strom I kurzzeitig über den von der Referenzspannung Uref festgelegten Schwellwert an, so daß der Grenzwertkomparator 10 folglich ein Ausschaltsignal A an die Steuerschaltung 9 abgibt. Hierdurch wird der Halbleiterschalter 5 kurzzeitig geöffnet und die Netzspannungsspitze bzw. der damit auch verbundene erhöhte Primärladestrom I werden über den Einschaltstrom-Begrenzungswiderstand 4 auf ungefährliche Werte herabgesetzt.

## Ansprüche

Überspannungsschutzeinrichtung für eine Elektronikschaltung, deren Betriebsgleichspannung über einen Gleichrichter, einen Einschaltstrom-Begrenzungswiderstand mit parallelgeschaltetem Halbleiterschalter und einen Glättungskondensator direkt aus der Netzwechselspannung gewonnen wird, dadurch gekennzeichnet, daß eine Stromerfassungseinrichtung (6) zwischen der Parallelschaltung aus Einschaltstrom-Begrenzungswiderstand (4)/Halbleiterschalter (5) und dem Glättungskondensator (7) vorgesehen ist und daß ein Grenzwertkomparator (10) zum Vergleich der von der Stromerfassungseinrichtung (6) abgegebenen Signalspannung (US) mit einer Referenzspannung (Uref) dient, wobei der Grenzwertkomparator (10) ein Ausschaltsignal (A) an eine Steuerschaltung (9) für den Halbleiterschalter (5) abgibt, wenn die Signalspannung (US) die Referenzspannung (Uref) überschreitet.